# EUROPEAN PATENT APPLICATION

(11) **EP 3 103 985 A1**
(43) Date of publication of application: **14.12.2016**
(21) Application number: 14880396.8
(22) Date of filing: 30.01.2014
(51) Int. Cl.: F02B 29/04, F02B 37/00, F02B 37/013

(54) **ENGINE**

(71) Applicant: Yanmar Co., Ltd., Osaka-shi, Osaka 530-8311 (JP)
(72) Inventor: TAKAHATA, Yasuyuki, Osaka-shi, Osaka 530-8311 (JP); HAMAOKA, Shunji, Osaka-shi, Osaka 530-8311 (JP); YOKOYAMA, Tetsuya, Osaka-shi, Osaka 530-8311 (JP); NISHIURA, Fumihiro, Osaka-shi, Osaka 530-8311 (JP)
(74) Representative: Kuhnen & Wacker
(86) International application number: PCT/JP2014/052113
(87) International publication number: WO 2015/114777

(57) **Abstract**

Provided is an engine with a two-stage supercharger whereby an increase in required space for installing an engine can be suppressed without impairing cooling performance of an intercooler. This engine (1) has a first compressor unit (8) and second compressor unit (12) disposed in an air intake device (2) forming an intake air passage, and this engine (1) is configured such that intake air pressurized by the first compressor unit (8) is cooled by an intercooler (14) and supplied to the second compressor unit (12), and the intake air pressurized by the second compressor unit (12) is cooled by the intercooler (14).

## Description

### Technical Field

The present invention relates to an engine. In detail, the present invention relates to an engine with a two-stage supercharger.

### Background Art

Conventionally, an engine with a two-stage supercharger in which cooling devices are provided respectively downstream a first supercharger and a second supercharger is known. Air compressed by the first supercharger is cooled in an intercooler and supplied to the second supercharger, and the air compressed further in the second supercharger is cooled in an aftercooler which is a cooling device and supplied to an engine. For example, the art described in the Patent Literature 1 is so.

In an engine with a two-stage supercharger described in the Patent Literature 1, an intercooler of exclusive use is provided for every supercharger and a cooling water pipe for supplying cooling water is provided for every intercooler. Accordingly, it is disadvantageous in that a space required for installation of the engine is increased following increase of the superchargers. On the other hand, the configuration in which a capacity of the intercooler is reduced so as to reduce the space required for installation of the engine is disadvantageous in that cooling ability of the intercooler is worsened.

### Prior Art Reference

### Patent Literature

Patent Literature 1: the Japanese Patent Laid Open Gazette 1994-66146

### Disclosure of Invention

### Problems to Be Solved by the Invention

The present invention is provided in consideration of the conditions as mentioned above, and the purpose of the invention is to provide an engine which can suppress increase of a space required for installation of the engine without worsening cooling ability of an intercooler.

### Means for Solving the Problems

The problems to be solved by the present invention have been described above, and subsequently, the means of solving the problems will be described below.

According to the present invention, in an engine in which a first compressor unit and a second compressor unit are provided in an air intake passage, intake air compressed by the first compressor unit is cooled by an intercooler and supplied to the second compressor unit, and the intake air compressed by the second compressor unit is cooled by the intercooler.

According to the present invention, a first air passage and a second air passage are configured in a cooler casing of the intercooler so as to intersect a cooling core to which cooling water is supplied, and the first compressor unit is connected to the first air passage, and the second compressor unit is connected to the second air passage.

According to the present invention, the first air passage and the second air passage are arranged so as to be adjacent to each other via a hollow partition member.

According to the present invention, cooling water is supplied to an inside of the partition member.

According to the present invention, cooling water supplied to the cooling core is discharged through the inside of the partition member.

According to the present invention, the cooling core is configured by a first cooling core and a second cooling core, the partition member is arranged between the first cooling core and the second cooling core. A cooling water supply port and a cooling water discharge port are provided in one of side surfaces of the cooler casing and a cooling water passage is configured in the other side surface. Inside the partition member, a supply side storage chamber and a discharge side storage chamber are configured, a plurality of cooling water tubules provided in the first cooling core and the second cooling core are connected to the supply side storage chamber and the discharge side storage chamber so that cooling water can be stored, cooling water supplied from the cooling water supply port to the first cooling core is supplied via the supply side storage chamber to the second cooling core, and the cooling water supplied to the second cooling core is supplied via the discharge side storage chamber to the first cooling core and discharged from the cooling water discharge port.

According to the present invention, a cooling core that cooling water is supplied into a cooler casing of the intercooler is arranged and a plurality of air passages are configured so as to intersect the cooling core. Intake air compressed by the first compressor unit is supplied to one or more of the plurality of the air passages, and intake air compressed by the second compressor unit is supplied to the other of the plurality of the air passages to which the intake air compressed by the first compressor unit is not supplied.

### Effect of the Invention

The present invention configured as the above brings the following effects.

According to the present invention, it is not necessary to provide an intercooler and a cooling water pipe in each of the compressor. Accordingly, increase of a space required for installation of the engine can be suppressed without worsening cooling ability of the intercooler caused by reducing the capacity.

According to the present invention, intake air supplied from a plurality of compressors is cooled by the one intercooler. Accordingly, increase of the space required for installation of the engine can be suppressed without worsening the cooling ability of the intercooler caused by reducing the capacity.

According to the present invention, heat insulation performance between the air passages in the one intercooler is improved, whereby intake air supplied from different compressors in the air passages is cooled stably. Accordingly, increase of the space required for installation of the engine can be suppressed without worsening the cooling ability of the intercooler caused by reducing the capacity.

According to the present invention, heat insulation performance between the air passages in the one intercooler is improved further, whereby intake air supplied from different compressors in the air passages is cooled more stably. Accordingly, increase of the space required for installation of the engine can be suppressed without worsening the cooling ability of the intercooler caused by reducing the capacity.

According to the present invention, the heat insulation performance between the air passages in the one intercooler is improved further by circulation of the cooling water in the partition member, whereby intake air supplied from the different compressors in the air passages is cooled stably. Accordingly, increase of the space required for installation of the engine can be suppressed without worsening the cooling ability of the intercooler caused by reducing the capacity.

According to the present invention, intake air with different temperature can be supplied simultaneously to the one intercooler without being mixed. The heat insulation performance between the plurality of the air passages is improved, whereby heat exchange between the intake air passing through the air passages is suppressed. Accordingly, air from different passages can be cooled simultaneously without worsening the cooling ability.

According to the present invention, by the one intercooler, the intake air supplied from the plurality of the compressors is cooled several times corresponding to the form of the intercooler. Accordingly, increase of the space required for installation of the engine can be suppressed without worsening the cooling ability of the intercooler.

### Brief Description of Drawings

[Fig. 1] Fig. 1 is a schematic drawing of an engine according to a first embodiment of the present invention and an intercooler provided therein.
[Fig. 2] Fig. 2 is a front view of the engine according to the first embodiment of the present invention.
[Fig. 3] Fig. 3 is a plan view of the engine according to the first embodiment of the present invention.
[Fig. 4] Fig. 4 is a right side view of the engine according to the first embodiment of the present invention.
[Fig. 5] Fig. 5 is a rear view of the engine according to the first embodiment of the present invention.
[Fig. 6] Fig. 6 is a left side view of the engine according to the first embodiment of the present invention.
[Fig. 7] Fig. 7 is a bottom view of the engine according to the first embodiment of the present invention.
[Fig. 8] Fig. 8 is a perspective view of the intercooler of the engine according to the first embodiment of the present invention.
[Fig. 9] Fig. 9 is an arrow sectional view of a line A in Fig. 8.
[Fig. 10] Fig. 10 is an arrow sectional view of a line B in Fig. 9.
[Fig. 11] Fig. 11 is a schematic drawing of operation mode of the intercooler provided in the engine according to the first embodiment of the present invention in Fig. 9.
[Fig. 12] Fig. 12 is a schematic drawing of an engine according to a second embodiment of the present invention and an intercooler provided therein.

### Detailed Description of the Invention

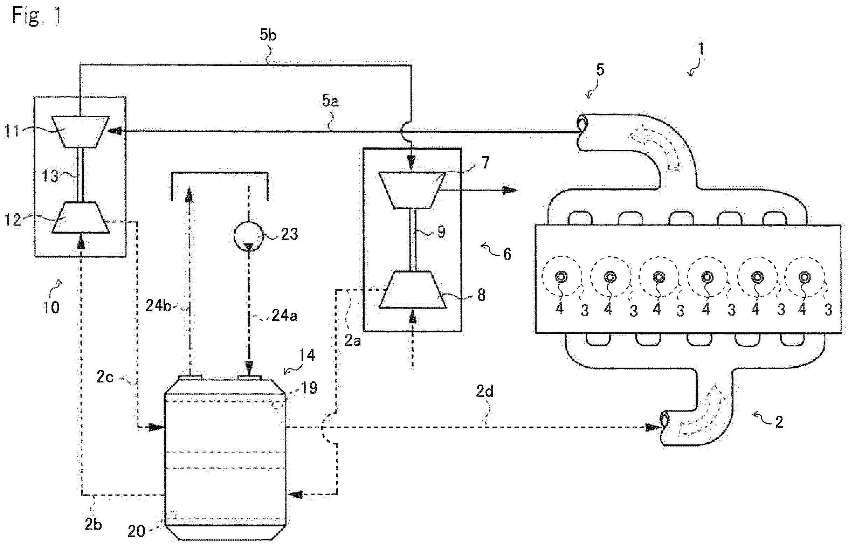

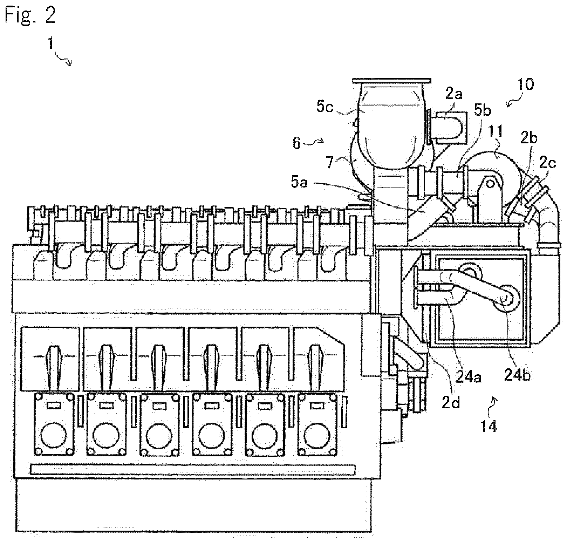

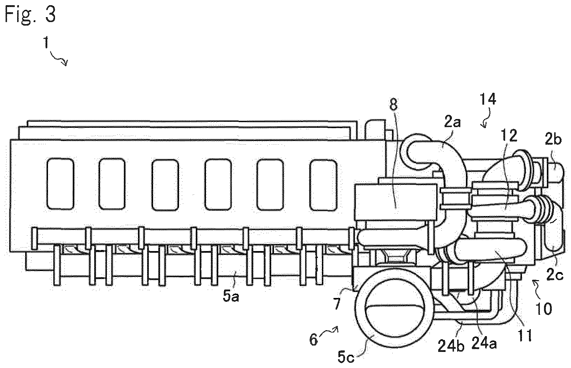

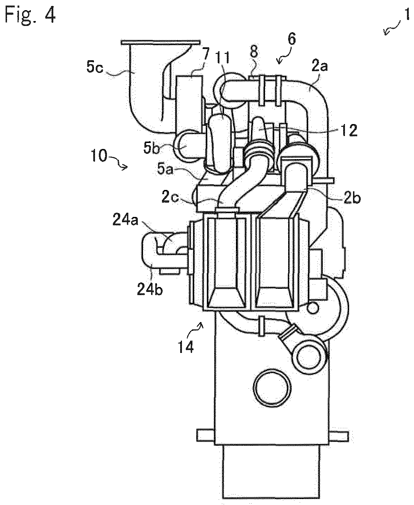

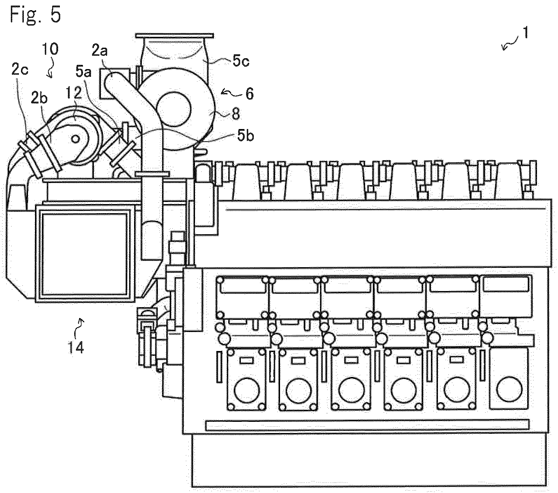

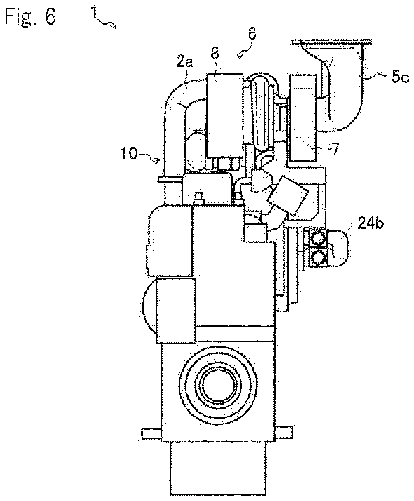

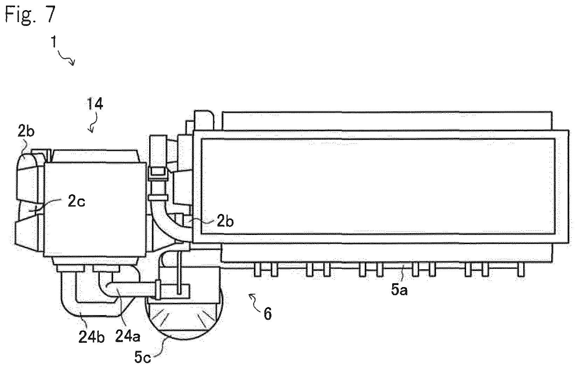

Below, an engine 1 having a first supercharger 6 and second supercharger 10 according to a first embodiment of the present invention is explained referring to Figs. 1 to 7.

In the engine 1, air supplied via an air intake device 2 and fuel supplied from six fuel injection valves 4 are mixed and burnt in cylinders 3 so as to drive rotatively an output shaft. The engine 1 discharges exhaust gas generated by combustion of the fuel to the outside via an exhaust device 5. The first supercharger 6, the second supercharger 10 and an intercooler 14 are connected to the engine 1. Concretely, the engine 1 is connected via an exhaust pipe 5a to a second turbine unit 11 of the second supercharger 10. The engine 1 is connected via an intake pipe 2d of the air intake device 2 to the intercooler 14.

The first supercharger 6 which is a low pressure stage supercharger (first supercharger) pressure-compresses the intake air by exhaust pressure of the exhaust gas as a drive source. The first supercharger 6 is arranged at one of ends of the engine 1 in a direction of the output shaft. The first supercharger 6 has a first turbine unit 7 and a first compressor unit 8. The first turbine unit 7 can be rotated by exhaust pressure of the exhaust gas supplied via an exhaust pipe 5b from the second turbine unit 11 of the second supercharger 10 discussed later. The first turbine unit 7 can discharge the exhaust gas to the outside.

The first compressor unit 8 is connected to the first turbine unit 7 by a connection shaft 9 and is rotatable. The first compressor unit 8 can pressure-compresses the intake air by the rotation. The first compressor unit 8 can suck air from the outside. The first compressor unit 8 is connected via an intake pipe 2a to a first air passage 19 of the intercooler 14.

The second supercharger 10 which is a high pressure stage supercharger (second supercharger) pressure-compresses again the intake air, which is pressure-compressed by the first supercharger 6 which is the low pressure stage supercharger, by exhaust pressure of the exhaust gas as a drive source. The second supercharger 10 has the second turbine unit 11 and a second compressor unit 12. The second supercharger 10 is arranged at the one of ends of the engine 1 so as to be adjacent to the first supercharger 6. The second turbine unit 11 can be rotated by exhaust pressure of the exhaust gas supplied via the exhaust pipe 5a from the engine 1. The second turbine unit 11 is connected via the exhaust pipe 5b to the first turbine unit 7 of the first supercharger 6. The first turbine unit 7 is connected via an exhaust pipe 5c to the outside. Namely, the exhaust device 5 is configured so that the exhaust pipe 5a, the second turbine unit 11, the exhaust pipe 5b, the first turbine unit 7 and the exhaust pipe 5c are connected in this order from the upstream side.

The second compressor unit 12 is connected to the second turbine unit 11 by a connection shaft 13 and is rotatable. The second compressor unit 12 can pressure-compresses the intake air by the rotation. The second compressor unit 12 is connected via an intake pipe 2c to a second air passage 20 of the intercooler 14 discussed later.

The intercooler 14 cools the intake air. The intercooler 14 performs heat exchange between cooling water supplied by a cooling water pump 23 and the intake air so as to cool the intake air. The intercooler 14 is arranged at the one of ends of the engine 1 and below the second supercharger 10. In the intercooler 14, the first air passage 19 and the second air passage 20 are configured independently. The first air passage 19 is connected via an intake pipe 2b to the second compressor unit 12 of the second supercharger 10. The second air passage 20 is connected via the intake pipe 2d to the engine 1. Namely, in the air intake device 2, the first compressor unit 8, the intake pipe 2a, the first air passage 19 of the intercooler 14, the intake pipe 2b, the second compressor unit 12, the intake pipe 2c, and the second air passage 20 of the intercooler 14 are connected in this order from the upstream side.

Next, flows of the intake air and the exhaust gas are explained referring to Fig. 1.

As shown in Fig. 1, the exhaust gas from the engine 1 is supplied via the exhaust pipe 5a to the second turbine unit 11 of the second supercharger 10. The second turbine unit 11 is rotated by exhaust pressure of the exhaust gas. Rotation power of the second turbine unit 11 is transmitted via the connection shaft 13 to the second compressor unit 12. The second compressor unit 12 is rotated by the rotation power transmitted from the second turbine unit 11. The exhaust gas supplied to the second turbine unit 11 is discharged from the second supercharger 10 via the exhaust pipe 5b.

The exhaust gas discharged from the second supercharger 10 is supplied via the exhaust pipe 5b to the first turbine unit 7 of the first supercharger 6. The first turbine unit 7 is rotated by exhaust pressure of the exhaust gas. Rotation power of the first turbine unit 7 is transmitted via the connection shaft 9 to the first compressor unit 8. The first compressor unit 8 is rotated by the rotation power transmitted from the first turbine unit 7. The exhaust gas supplied to the first turbine unit 7 is discharged to the outside via the exhaust pipe 5c, a purifying device (not shown) and the like.

The air of the outside is sucked and pressure-compressed by the first compressor unit 8 rotated by the rotation power from the first turbine unit 7 of the first supercharger 6. In this case, compression heat is generated by the pressure compression and temperature of the intake air is raised. The air pressure-compressed by the first compressor unit 8 is discharged via the intake pipe 2a from the first supercharger 6.

The intake air discharged from the first supercharger 6 is supplied via the intake pipe 2a to the first air passage 19 of the intercooler 14. The intake air is cooled in the first air passage 19. The intake air supplied to the first air passage 19 is discharged via the intake pipe 2b from the intercooler 14.

The intake air discharged from the intercooler 14 is supplied via the intake pipe 2b to the second compressor unit 12 of the second supercharger 10. The intake air is sucked and pressure-compressed by the second compressor unit 12 rotated by the rotation power from the second turbine unit 11 of the second supercharger 10. In this case, compression heat is generated by the pressure compression and temperature of the intake air is raised. The air pressure-compressed by the second compressor unit 12 is discharged via the intake pipe 2c from the second supercharger 10.

The intake air discharged from the second supercharger 10 is supplied via the intake pipe 2c to the second air passage 20 of the intercooler 14. The intake air is cooled in the second air passage 20. The intake air supplied to the second air passage 20 is discharged via the intake pipe 2d from the intercooler 14. The intake air discharged from the intercooler 14 is supplied via the intake pipe 2d to the engine 1.

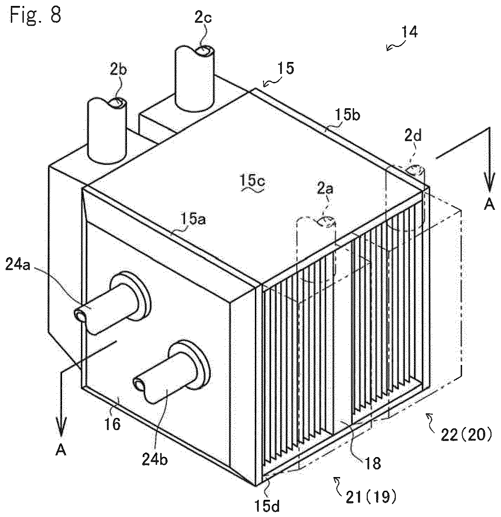

Below, the intercooler 14 according to the first embodiment of the present invention is explained concretely referring to Figs. 8 to 10.

The intercooler 14 cools the intake air discharged from the first supercharger 6 and the second supercharger 10 by cooling water. The intercooler 14 has mainly a cooler casing 15, a first cooling core 21 and a second cooling core 22.

As shown in Fig. 8, the cooler casing 15 is a main constituting member constituting the intercooler 14. The cooler casing 15 is formed substantially rectangular parallelepiped-like. In a first side surface of the cooler casing 15, a first wall surface 15a is formed so as to cover the whole first side surface. In a second side surface facing the first side surface of the cooler casing 15, a second wall surface 15b is formed so as to cover the whole second side surface.

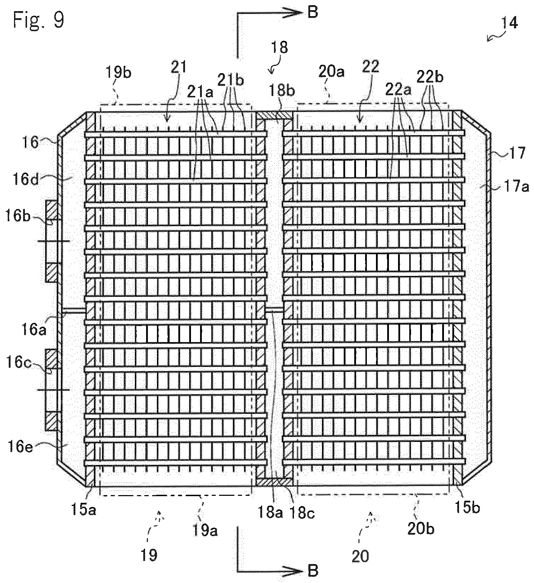

As shown in Figs. 8 and 9, in the first wall surface 15a, a cooling water pipe connecting cover 16 is provided so as to cover the whole first wall surface 15a. The cooling water pipe connecting cover 16 is formed so as to make a space between itself and the first wall surface 15a. The space configured by the cooling water pipe connecting cover 16 and the first wall surface 15a is divided by a cover dividing plate 16a extended from the cooling water pipe connecting cover 16 so as to contact the first wall surface 15a.

In the cooling water pipe connecting cover 16, a cooling water supply port 16b is formed so as to be communicated with one of spaces divided by the cover dividing plate 16a. Accordingly, in the first side surface of the cooler casing 15, a cooling water supply chamber 16d is configured by a part of the cooling water pipe connecting cover 16 in which the first wall surface 15a and the cooling water supply port 16b are formed and the cover dividing plate 16a. In the cooling water pipe connecting cover 16, a cooling water discharge port 16c is formed so as to be communicated with the other of the divided spaces. Accordingly, in the first side surface of the cooler casing 15, a cooling water discharge chamber 16e is configured by a part of the cooling water pipe connecting cover 16 in which the first wall surface 15a and the cooling water discharge port 16c are formed and the cover dividing plate 16a. A cooling water pipe 24a is connected to the cooling water supply port 16b. A cooling water pipe 24b is connected to the cooling water discharge port 16c.

As shown in Fig. 9, a cooling water passage cover 17 is attached to the second wall surface 15b so as to cover the whole second wall surface 15b. The cooling water passage cover 17 is formed so as to make a space between itself and the second wall surface 15b. Accordingly, in the second side surface of the cooler casing 15, a cooling water passage 17a is configured by the second wall surface 15b and the cooling water passage cover 17.

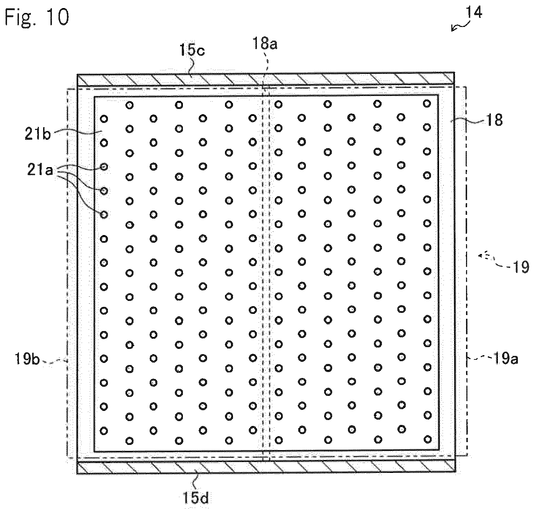

As shown in Figs. 8 and 10, in a third side surface of the cooler casing 15, a third wall surface 15c is formed so as to cover the whole third side surface. In a fourth side surface facing the third side surface of the cooler casing 15, a fourth wall surface 15d is formed so as to cover the whole fourth side surface. In the cooler casing 15, a partition wall surface 18 which is a partition member is provided so that ends thereof are connected respectively to the third wall surface 15c and the fourth wall surface 15d. Namely, the partition wall surface 18 divides the inside of the cooler casing 15 into two.

As shown in Fig. 9, the partition wall surface 18 is arranged so that a plate surface thereof faces the first wall surface 15a. Accordingly, as shown in Fig. 8, in the cooler casing 15, the first air passage 19 is configured by the first wall surface 15a, the third wall surface 15c, the fourth wall surface 15d and the partition wall surface 18. In the cooler casing 15, the second air passage 20 is configured by the second wall surface 15b, the third wall surface 15c, the fourth wall surface 15d and the partition wall surface 18. Namely, in the cooler casing 15, the first air passage 19 and the second air passage 20 are configured so as to be adjacent to each other via the partition wall surface 18.

In a fifth side surface of the cooler casing 15, a first air supply port 19a of the first air passage 19 and a second air discharge port 20b of the second air passage 20 are configured. In a sixth side surface facing the fifth side surface of the cooler casing 15, a first air discharge port 19b of the first air passage 19 and a second air supply port 20a of the second air passage 20 are configured. The first air supply port 19a is connected via the intake pipe 2a to the first compressor unit 8 of the first supercharger 6 (see Figs. 1 and 8). The second air supply port 20a is connected via the intake pipe 2c to the second compressor unit 12 of the second supercharger 10 (see Figs. 1 and 8).

The partition wall surface 18 is configured hollowly. In an inner space of the partition wall surface 18, a partition dividing plate 18a is arranged at a position overlapping the cover dividing plate 16a of the cooling water pipe connecting cover 16. Namely, in the inner space of the partition wall surface 18, a supply side storage chamber 18b facing the cooling water supply chamber 16d configured in the first side surface of the cooler casing 15 and a discharge side storage chamber 18c facing the cooling water discharge chamber 16e configured in the first side surface are configured.

The first cooling core 21 and the second cooling core 22 perform heat exchange between cooling water and the intake air. As shown in Figs. 9 and 10, the first cooling core 21 is configured by a plurality of cooling water tubules 21a, 21a, ... (hereinafter, simply referred to as "a plurality of cooling water tubules 21a") and a plurality of platy fins 21b, 21b, ... (hereinafter, simply referred to as "a plurality of platy fins 21b"). Similarly, the second cooling core 22 is configured by a plurality of cooling water tubules 22a, 22a, ... (hereinafter, simply referred to as "a plurality of cooling water tubules 22a") and a plurality of platy fins 22b, 22b, ... (hereinafter, simply referred to as "a plurality of platy fins 22b").

The first cooling core 21 and the second cooling core 22 are configured so that the plurality of the platy fins 21b and 22b are attached so as to be laminated in layers respectively on the cooling water tubules 21 a and 22a arranged at predetermined intervals so that openings thereof are arranged in a same plane. Namely, the first cooling core 21 and the second cooling core 22 are configured so that the plurality of the platy fins 21b and 22b penetrate respectively the plurality of the cooling water tubules 21 a and 22a laminated at the predetermined intervals. Accordingly, the first cooling core 21 and the second cooling core 22 are configured so that heat exchange can be performed between intake air passing through spaces between the plurality of the platy fins 21b and 22b and cooling water passing through an inside of the plurality of the cooling water tubules 21a and 22a via the plurality of the cooling water tubules 21a and 22a and the plurality of the platy fins 21b and 22b.

The first cooling core 21 is provided in the first air passage 19. The first cooling core 21 is configured so that one of ends of each of the plurality of the cooling water tubules 21a is communicated with the cooling water supply chamber 16d and the cooling water discharge chamber 16e configured in the first side surface of the cooler casing 15. The first cooling core 21 is configured so that the other end of each of the plurality of the cooling water tubules 21a is communicated with the supply side storage chamber 18b and the discharge side storage chamber 18c configured in the partition wall surface 18. Accordingly, the first cooling core 21 is configured so that the spaces between the plurality of the platy fins 21b go from the first air supply port 19a configured in the fifth side surface of the cooler casing 15 to the first air discharge port 19b configured in the sixth side surface of the cooler casing 15. Namely, the first cooling core 21 is configured so that intake air can pass from the first air supply port 19a to the first air discharge port 19b.

The second cooling core 22 is provided in the second air passage 20. The second cooling core 22 is configured so that one of ends of each of the plurality of the cooling water tubules 22a is communicated with the cooling water passage 17a configured in the second side surface of the cooler casing 15. The second cooling core 22 is configured so that the other end of each of the plurality of the cooling water tubules 22a is communicated with the supply side storage chamber 18b and the discharge side storage chamber 18c configured in the partition wall surface 18. Accordingly, the second cooling core 22 is configured so that the spaces between the plurality of the platy fins 22b go from the second air supply port 20a configured in the fifth side surface of the cooler casing 15 to the second air discharge port 20b configured in the sixth side surface of the cooler casing 15. Namely, the second cooling core 22 is configured so that intake air can pass from the second air supply port 20a to the second air discharge port 20b.

The cooling water supply chamber 16d of the first side surface and the supply side storage chamber 18b of the partition wall surface 18 are communicated via a part of the plurality of the cooling water tubules 21a of the first cooling core 21. The supply side storage chamber 18b and the cooling water passage 17a of the second side surface are communicated via a part of the plurality of the cooling water tubules 22a of the second cooling core 22. The cooling water passage 17a and the discharge side storage chamber 18c of the partition wall surface 18 are communicated via the other part of the plurality of the cooling water tubules 22a of the second cooling core 22. The discharge side storage chamber 18c and the cooling water discharge chamber 16e of the first side surface communicated via the other part of the plurality of the cooling water tubules 21a of the first cooling core 21. Namely, the cooling water supply chamber 16d is communicated with the cooling water discharge chamber 16e via the first cooling core 21, the supply side storage chamber 18b, the second cooling core 22, the cooling water passage 17a, the second cooling core 22, the discharge side storage chamber 18c and the first cooling core 21 in this order.

As the intercooler 14 provided in the engine 1 according to another embodiment of the present invention, the cooling water tubules may be formed substantially U-like so as to configure the cooling water tubules 21a of the first cooling core 21 and the cooling water tubules 22a of the second cooling core 22 integrally. According to the configuration, the cooling water can be circulated without configuring the cooling water passage 17a in the second side surface of the intercooler 14.

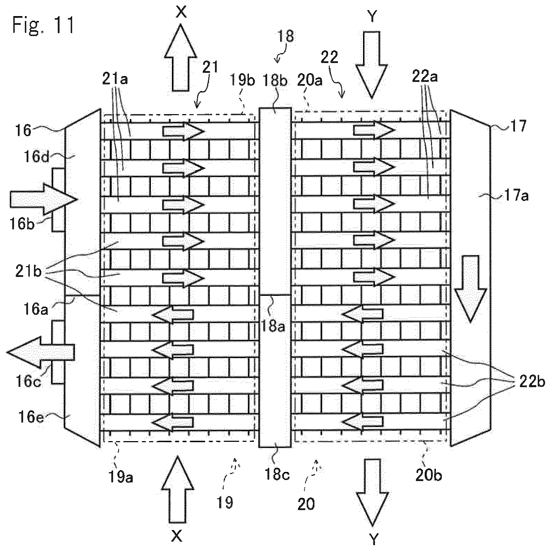

Below, an operation mode of the intercooler 14 provided in the engine 1 according to the first embodiment of the present invention is explained concretely referring to Fig. 11.

As shown in Fig. 11, cooling water is supplied by the cooling water pump 23 via the cooling water pipe 24a from the cooling water supply port 16b to the cooling water supply chamber 16d of the first side surface. The supplied cooling water passes through the part of the plurality of the cooling water tubules 21a of the first cooling core 21 communicated with the cooling water supply chamber 16d and flows into the supply side storage chamber 18b of the partition wall surface 18. The cooling water flowing into the supply side storage chamber 18b passes through the part of the plurality of the cooling water tubules 22a of the second cooling core 22 communicated with the supply side storage chamber 18b and flows into the cooling water passage 17a of the second side surface while filling an inside of the supply side storage chamber 18b.

The cooling water flowing into the cooling water passage 17a passes through the part of the plurality of the cooling water tubules 22a of the second cooling core 22 communicated with the discharge side storage chamber 18c and flows into the discharge side storage chamber 18c of the partition wall surface 18 while filling an inside of the cooling water passage 17a. The cooling water flowing into the discharge side storage chamber 18c passes through the part of the plurality of the cooling water tubules 21a of the first cooling core 21 communicated with the discharge side storage chamber 18c and flows into the cooling water discharge chamber 16e of the first side surface while filling an inside of the discharge side storage chamber 18c. The cooling water flowing into the cooling water discharge chamber 16e is discharged from the cooling water discharge port 16c via the cooling water pipe 24b.

Intake air supplied by the first compressor unit 8 of the first supercharger 6 from the first air supply port 19a to the first air passage 19 passes through the spaces between the platy fins 21b of the first cooling core 21 and discharged from the first air discharge port 19b (see an arrow X). In this case, the intake air contacts the plurality of the cooling water tubules 21a and the plurality of the platy fins 21b so as to perform heat exchange with the cooling water, thereby being cooled. The intake air discharged from the first air discharge port 19b is supplied to the second supercharger 10.

Intake air supplied by the second compressor unit 12 of the second supercharger 10 from the second air supply port 20a to the second air passage 20 passes through the spaces between the platy fins 22b of the second cooling core 22 and discharged from the second air discharge port 20b (see an arrow Y). In this case, the intake air contacts the plurality of the cooling water tubules 22a and the plurality of the platy fins 22b so as to perform heat exchange with the cooling water, thereby being cooled. The intake air discharged from the second air discharge port 20b is supplied to the engine 1.

As mentioned above, the intercooler 14 can supply the cooling water to the first cooling core 21 and the second cooling core 22 by the cooling water pipe 24a which is the one cooling water passage. Accordingly, increase of a space required for installation of the engine 1 can be suppressed. It is not necessary to reduce a capacity of the intercooler 14 for securing a space required for installation of the cooling water pipe. Furthermore, the intercooler 14 can suppress heat exchange between the intake air in the first air passage 19 and the intake air in the second air passage 20 by the partition wall surface 18 in which cooling water is stored. Namely, influence of the intake air in the first air passage 19 and the intake air in the second air passage 20 to each other can be suppressed. Accordingly, the intake air supplied from the first compressor unit 8 and the second compressor unit 12 is cooled more stably.

As the above, the engine 1 according to the first embodiment of the present invention is the engine 1 in which the first compressor unit 8 and the second compressor unit 12 are provided in the air intake device 2 which configures an intake passage, wherein the intake air compressed by the first compressor unit 8 is cooled by the intercooler 14 and supplied to the second compressor unit 12, and the intake air compressed by the second compressor unit 12 is cooled by the intercooler 14.

According to the configuration, it is not necessary to provide an intercooler and a cooling water pipe in each of the first compressor unit 8 and the second compressor unit 12. Accordingly, increase of a space required for installation of the engine 1 can be suppressed without worsening cooling ability of the intercooler 14 caused by reducing the capacity.

The first air passage 19 and the second air passage 20 are configured in the cooler casing 15 of the intercooler 14 so as to intersect the first cooling core 21 and the second cooling core 22 which are cooling cores to which cooling water is supplied, the first compressor unit 8 is connected to the first air passage 19, and the second compressor unit 12 is connected to the second air passage 20.

According to the configuration, the intake air supplied from the first compressor unit 8 and the second compressor unit 12 which are a plurality of compressors is cooled by the one intercooler 14. Accordingly, increase of a space required for installation of the engine 1 can be suppressed without worsening cooling ability of the intercooler 14 caused by reducing the capacity.

The first air passage 19 and the second air passage 20 are arranged so as to be adjacent to each other via the partition wall surface 18 which is a hollow partition member.

According to the configuration, heat insulation performance between the first air passage 19 and the second air passage 20 in the one intercooler 14 is improved, whereby intake air supplied from the first compressor unit 8 and the second compressor unit 12 which are different compressors in the first air passage 19 and the second air passage 20 is cooled stably. Accordingly, increase of a space required for installation of the engine 1 can be suppressed without worsening cooling ability of the intercooler 14 caused by reducing the capacity.

The cooling water is supplied to an inside of the partition wall surface 18.

According to the configuration, the heat insulation performance between the first air passage 19 and the second air passage 20 in the one intercooler 14 is improved further, whereby intake air supplied from the first compressor unit 8 and the second compressor unit 12 which are the different compressors in the first air passage 19 and the second air passage 20 is cooled stably. Accordingly, increase of a space required for installation of the engine 1 can be suppressed without worsening cooling ability of the intercooler 14 caused by reducing the capacity.

The cooling water supplied to the first cooling core 21 and the second cooling core 22 is discharged through the inside of the partition wall surface 18.

According to the configuration, the heat insulation performance between the first air passage 19 and the second air passage 20 in the one intercooler 14 is improved further by circulation of the cooling water in the partition wall surface 18, whereby intake air supplied from the first compressor unit 8 and the second compressor unit 12 which are the different compressors in the first air passage 19 and the second air passage 20 is cooled stably. Accordingly, increase of a space required for installation of the engine 1 can be suppressed without worsening cooling ability of the intercooler 14 caused by reducing the capacity.

As the above, the intercooler 14 can supply cooling water to the first cooling core 21 and the second cooling core 22 by the cooling water pipe 24a which is the one cooling water passage. Accordingly, in the case of installation of the intercooler 14, a space required for piping the cooling water pipe 24a can be suppressed. By the partition wall surface 18 in which cooling water is stored, the intercooler 14 can suppress the heat exchange between the intake air in the first air passage 19 and the intake air in the second air passage 20. Namely, influence of the intake air in the first air passage 19 and the intake air in the second air passage 20 to each other can be suppressed. Accordingly, when intake air with different temperature is supplied simultaneously to the first air passage 19 and the second air passage 20, influence of temperature of the intake air can be disregarded.

In the intercooler 14 provided in the engine 1 according to the first embodiment of the present invention, the first cooling core 21 and the second cooling core 22 which are the cooling cores that cooling water is supplied into the cooler casing 15 of the intercooler 14 are installed. In the cooler casing 15, the first air passage 19 and the second air passage 20 which are the plurality of the air passages are configured so as to intersect the first cooling core 21 and the second cooling core 22. In the first cooling core 21 and the second cooling core 22, the first air supply port 19a, the second air supply port 20a, the first air discharge port 19b and the second air discharge port 20b are provided.

According to the configuration, intake air with different temperature can be supplied simultaneously to the one intercooler 14 without being mixed. Accordingly, air from different passages can be cooled simultaneously without reducing the cooling ability.

According to the configuration, the heat insulation performance between the first air passage 19 and the second air passage 20 is improved, whereby heat exchange between the intake air passing through the first air passage 19 and the second air passage 20 is suppressed. Accordingly, air from different passages can be cooled simultaneously without reducing the cooling ability.

In the intercooler 14 in which the first cooling core 21 and the second cooling core 22 are arranged in the cooler casing 15, the cooling water supply port 16b and the cooling water discharge port 16c are provided in one of side surfaces of the cooler casing 15 and the cooling water passage 17a is provided in the other side surface. The partition wall surface 18 which is the partition member arranged between the first cooling core 21 and the second cooling core 22 configures the first air passage 19 and the second air passage 20 which are independent air passages. Inside the partition wall surface 18, the supply side storage chamber 18b and the discharge side storage chamber 18c are configured. The plurality of the cooling water tubules 21a and 22a provided in the first cooling core 21 and the second cooling core 22 are connected to the supply side storage chamber 18b and the discharge side storage chamber 18c so that the cooling water can be stored. The cooling water supplied from the cooling water supply port 16b to the first cooling core 21 is supplied via the supply side storage chamber 18b to the second cooling core 22, and the cooling water supplied to the second cooling core 22 is supplied via the discharge side storage chamber 18c to the first cooling core 21 and discharged from the cooling water discharge port 16c.

According to the configuration, intake air with different temperature can be supplied simultaneously to the one intercooler 14 without being mixed. The heat insulation performance between the first air passage 19 and the second air passage 20 which are the air passages is improved, whereby heat exchange between the intake air passing through the first air passage 19 and the second air passage 20 is suppressed. Accordingly, air from different passages can be cooled simultaneously without worsening the cooling ability.

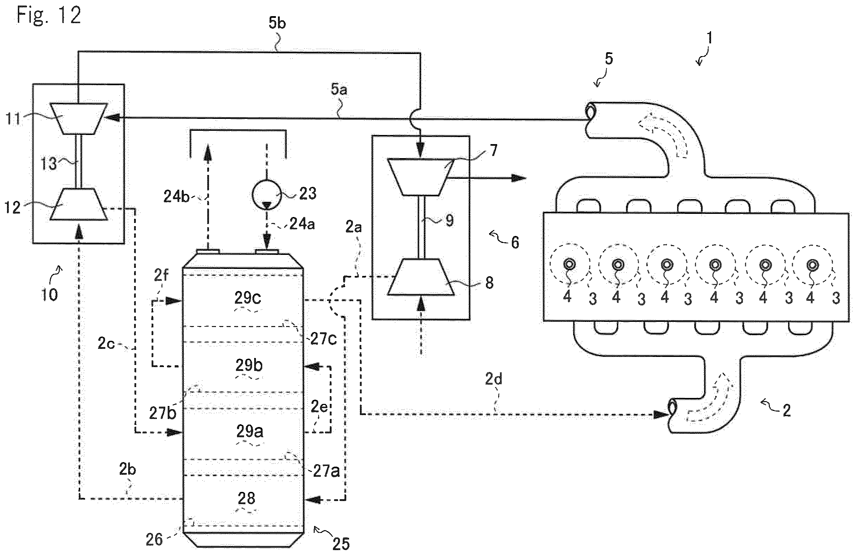

Next, the engine 1 having the first supercharger 6 and the second supercharger 10 which is a second embodiment of the engine according to the present invention is explained concretely referring to Fig. 12. In below explanation, a concrete explanation of points similar to the embodiment explained already is omitted, and parts different thereto is explained mainly.

The first supercharger 6, the second supercharger 10 and an intercooler 25 are connected to the engine 1. Concretely, the engine 1 is connected via the intake pipe 2d of the air intake device 2 to the intercooler 25.

The first compressor unit 8 is connected via the intake pipe 2a to a first air passage 26 of the intercooler 25.

The second compressor unit 12 is connected via the intake pipe 2c to a second air passage 27a of the intercooler 25 discussed later.

In the intercooler 25, the first air passage 26, the second air passage 27a, a third air passage 27b and a fourth air passage 27c are configured independently. A first cooling core 28 is provided in the first air passage 26. A second cooling core 29a is provided in the second air passage 27a. A third cooling core 29b is provided in the third air passage 27b. A fourth cooling core 29c is provided in the fourth air passage 27c. In this embodiment, the first air passage 26, the second air passage 27a, the third air passage 27b and the fourth air passage 27c are not necessary to be adjacent along the same direction, and can be arranged corresponding to a form of the intercooler 25. Namely, the form of the intercooler can be determined corresponding to an installation space of the engine. Also, the number of the air passages is not limited to this embodiment.

In the form of the intercooler 25, the first air passage 26 is connected via the intake pipe 2b to the second compressor unit 12 of the second supercharger 10. The second air passage 27a is connected via an intake pipe 2e to the third air passage 27b. The third air passage 27b is connected via an intake pipe 2f to the fourth air passage 27c. The fourth air passage 27c is connected via the intake pipe 2d to the engine 1.

Next, flows of intake air and exhaust gas are explained referring to Fig. 12.

The intake air discharged from the first supercharger 6 is supplied via the intake pipe 2a to the first air passage 26 of the intercooler 25. The intake air is cooled in the first air passage 26. The intake air supplied to the first air passage 26 is discharged via the intake pipe 2b from the intercooler 25.

The intake air discharged from the second supercharger 10 is supplied via the intake pipe 2c to the second air passage 27a of the intercooler 25. The intake air is cooled in the second air passage 27a. The intake air supplied to the second air passage 27a is supplied via the intake pipe 2e to the third air passage 27b. The intake air is cooled further in the third air passage 27b. The intake air supplied to the third air passage 27b is supplied via the intake pipe 2f to the fourth air passage 27c. The intake air is cooled further in the fourth air passage 27c. The intake air supplied to the fourth air passage 27c is discharged via the intake pipe 2d from the intercooler 25. The intake air discharged from the intercooler 25 is supplied via the intake pipe 2d to the engine 1.

As the above, in the engine 1 according to the second embodiment of the present invention, the first cooling core 28, the second cooling core 29a, the third cooling core 29b and the fourth cooling core 29c that cooling water is supplied into the cooler casing 15 of the intercooler 25 are arranged. The first air passage 26, the second air passage 27a, the third air passage 27b and the fourth air passage 27c which are the plurality of the air passages are configured so as to intersect the cooling cores. Intake air compressed by the first compressor unit 8 is supplied to the first air passage 26 which is one or more of the plurality of the air passages. Intake air compressed by the second compressor unit 12 is supplied to the second air passage 27a, the third air passage 27b and the fourth air passage 27c which are the other of the plurality of the air passages to which the intake air compressed by the first compressor unit 8 is not supplied.

According to the configuration, by the one intercooler 25, the intake air supplied from the first compressor unit 8 and the second compressor unit 12 which are the plurality of the compressors is cooled several times corresponding to the form of the intercooler 25. Accordingly, increase of the space required for installation of the engine 1 can be suppressed without worsening the cooling ability of the intercooler 25.

### Industrial Applicability

The present invention can be used for an art of an engine with a two-stage supercharger.

### Description of Notations

- 1: engine
- 2: air intake device
- 8: first compressor unit
- 12: second compressor unit
- 14: intercooler
- 15: cooler casing
- 19: first air passage
- 19a: first air supply port
- 19b: first air discharge port
- 20: second air passage
- 20a: second air supply port
- 20b: second air discharge port
- 21: first cooling core
- 22: second cooling core

## Claims

1. An engine in which a first compressor unit and a second compressor unit are provided in an air intake passage,
**characterized in that** intake air compressed by the first compressor unit is cooled by an intercooler and supplied to the second compressor unit, and the intake air compressed by the second compressor unit is cooled by the intercooler.

2. The engine according to claim 1,
wherein a first air passage and a second air passage are configured in a cooler casing of the intercooler so as to intersect a cooling core to which cooling water is supplied, and
wherein the first compressor unit is connected to the first air passage, and the second compressor unit is connected to the second air passage.

3. The engine according to claim 2, wherein the first air passage and the second air passage are arranged so as to be adjacent to each other via a hollow partition member.

4. The engine according to claim 3, wherein cooling water is supplied to an inside of the partition member.

5. The engine according to claim 3 or 4, wherein cooling water supplied to the cooling core is discharged through the inside of the partition member.

6. The engine according to claim 5,
wherein the cooling core is configured by a first cooling core and a second cooling core,
wherein the partition member is arranged between the first cooling core and the second cooling core,
wherein a cooling water supply port and a cooling water discharge port are provided in one of side surfaces of the cooler casing and a cooling water passage is configured in the other side surface, and
wherein inside the partition member, a supply side storage chamber and a discharge side storage chamber are configured, a plurality of cooling water tubules provided in the first cooling core and the second cooling core are connected to the supply side storage chamber and the discharge side storage chamber so that cooling water can be stored, cooling water supplied from the cooling water supply port to the first cooling core is supplied via the supply side storage chamber to the second cooling core, and the cooling water supplied to the second cooling core is supplied via the discharge side storage chamber to the first cooling core and discharged from the cooling water discharge port.

7. The engine according to claim 1,
wherein a cooling core that cooling water is supplied into a cooler casing of the intercooler is arranged and a plurality of air passages are configured so as to intersect the cooling core, and
wherein intake air compressed by the first compressor unit is supplied to one or more of the plurality of the air passages, and intake air compressed by the second compressor unit is supplied to the other of the plurality of the air passages to which the intake air compressed by the first compressor unit is not supplied.
